# EUROPEAN PATENT SPECIFICATION

(11) **EP 3 222 936 B1**
(45) Date of publication and mention of the grant of the patent: **11.03.2020**
(21) Application number: 15877850.6
(22) Date of filing: 16.01.2015
(51) Int. Cl.: F25B 41/06, F16K 17/28, F16K 51/00, F25B 41/00

(54) **COOLING SYSTEM**
KÜHLSYSTEM
SYSTÈME DE REFROIDISSEMENT

(43) Date of publication of application: 27.09.2017
(73) Proprietor: Mitsubishi Heavy Industries Compressor Corporation, Minato-ku Tokyo 108-0014 (JP)
(72) Inventor: YOKOO Kazutoshi, Tokyo 108-8215 (JP); KANEKO Takeshi, Tokyo 108-8215 (JP); NAGAO Hideki, Hiroshima-shi Hiroshima 733-8553 (JP); MIZUSHITA Koichi, Hiroshima-shi Hiroshima 733-8553 (JP)
(74) Representative: Studio Torta S.p.A.
(86) International application number: PCT/JP2015/051064
(87) International publication number: WO 2016/113898

(56) References cited:
- JP-A- H07 146 032
- JP-A- H07 146 032
- JP-A- 2003 314 929
- JP-A- 2007 132 601
- JP-A- 2007 162 851
- JP-A- 2007 162 851
- JP-A- 2008 180 476
- JP-A- 2011 002 140
- US-A- 6 148 631

## Description

### TECHNICAL FIELD

The present invention relates to a cooling system with a pressure reducing device.

### BACKGROUND ART

Conventionally, it is known that a refrigerant vaporized by taking evaporation heat from an object to be cooled in a heat exchanger is liquefied in a compressor and a condenser, and then is reused through a pressure reducing valve (see Patent Document 1).

### RELATED ART DOCUMENT

### PATENT DOCUMENT

Patent Document 1: PCT International Publication No. WO 2014/041654
Patent Document 2: US-6,148,631

Document 2 discloses a cooling system comprising a compressor, a condenser, a pressure reducing device configured to reduce a pressure of the refrigerant which has been partially liquefied. The pressure reducing device comprises a pressure reducing valve and a microscopic bubble formation unit disposed inside a flow path for the refrigerant from the condenser to a heat exchanger.

### SUMMARY

### PROBLEMS TO BE SOLVED BY THE INVENTION

In recent years, as a heat exchanger of a cooling system for cooling a fluid, a stacked type heat exchanger in which a first plate having a flow path through which a fluid to be cooled flows and a second plate having a flow path through which a refrigerant flows are alternately stacked has become known. Such a stacked type heat exchanger is small in size and has high heat exchange efficiency because it has a plurality of thin flow paths. However, when the refrigerant being introduced into the thin flow paths of such a stacked type heat exchanger is a flow of a vapor-liquid mixed phase, since it is difficult for the refrigerant to be evenly introduced into each flow path, there is a possibility of degradation in heat exchange performance.

In order to allow only a liquid phase portion of the refrigerant to be introduced into the heat exchanger, providing a separator for separating the refrigerant in a vapor-liquid mixed phase flow in a stage subsequent to a pressure reducing valve into a vapor phase and a liquid phase in a stage ahead of the heat exchanger can be conceived. However, since the separator has a container for accommodating the refrigerant therein and separating it into a vapor phase and a liquid phase, the separator tends to be large. Thus, there is room for improvement in miniaturization of the cooling system using the heat exchanger with thin flow paths for the refrigerant.

That is, the present invention is directed to providing a compact cooling system with high heat exchange efficiency and a pressure reducing device thereof.

### MEANS FOR SOLVING THE PROBLEM

An aspect of the present invention provides a cooling system having the features of claim 1.

According to the present invention, since the microscopic bubble formation unit forms the vapor phase of the refrigerant that has become a flow of a vapor-liquid mixed phase into microscopic bubbles using the pressure reducing device and the microscopic bubbles are dispersed into a liquid phase and introduced into the heat exchanger, a heat exchange performance is higher than when a flow of the vapor-liquid mixed phase is directly introduced into the heat exchanger. Further, according to the present invention, since the microscopic bubble formation unit is disposed inside the flow path for the refrigerant, it is possible to reduce a size of the cooling system compared with a case in which a separator for separating the liquid phase of the refrigerant is provided in a stage ahead of the heat exchanger.

In the cooling system according to claim 1, the microscopic bubble formation unit includes opening member in which a plurality of through hole portions which constitute a plurality of microscopic flow paths having a flow path cross-sectional area smaller than a cross-sectional area of the flow path are formed.

In this case, since the vapor phase becomes microscopic bubbles in the process of the flow of the vapor-liquid mixed phase passing through the plurality of through hole portions, the configuration can be simple.

In the cooling system according to claim 1, an opening diameter at least on a discharge side of each through hole in the plurality of through hole portions is 1 mm or less.

In the cooling system according to the invention, each through hole in the plurality of through hole portions may have an elongated opening having a width of 1 mm or less.

In these cases, since the bubbles in the refrigerant become microscopic bubbles and the microscopic bubbles cannot easily grow until the microscopic bubbles in the refrigerant are introduced into the heat exchanger, it becomes easier for the refrigerant to be evenly introduced into each flow path of the heat exchanger and heat exchange performance cannot easily degrade.

The microscopic bubble formation unit according to claim 1, is disposed inside the pressure reducing valve. Therefore, since the microscopic bubble formation unit is inside the pressure reducing valve, the pressure reducing device can be small-sized.

The cooling system according to the invention, may further include a horizontal pipe having a refrigerant flow path which connects the microscopic bubble formation unit and the heat exchanger horizontally and in a straight line.

In this case, since the refrigerant in a state in which microscopic bubbles are dispersed therein due to having passed through the microscopic bubble formation unit is sent to the heat exchanger through the horizontal pipe horizontally and in a straight line, growth of the microscopic bubbles and vapor-liquid separation cannot easily occur.

According to the present invention, since the microscopic bubble formation unit forms the vapor phase of the refrigerant that has become a flow of a vapor-liquid mixed phase into microscopic bubbles using the pressure reducing device and the microscopic bubbles are dispersed into a liquid phase and introduced into the heat exchanger, a heat exchange performance is higher than when a flow of the vapor-liquid mixed phase is directly introduced into the heat exchanger. Further, according to the present invention, since the microscopic bubble formation unit is disposed inside the flow path for the refrigerant, it is possible to reduce a size of the cooling system compared with a case in which a separator for separating the liquid phase of the refrigerant is provided in a stage ahead of the heat exchanger.

### ADVANTAGE OF THE INVENTION

According to the present invention, it is possible to provide a compact cooling system with high heat exchange efficiency and a pressure reducing device thereof.

### BRIEF DESCRIPTION OF THE DRAWINGS

Fig. 1 is a schematic view of a cooling system of a first embodiment of the present invention.
Fig. 2 is a schematic view illustrating a pressure reducing valve of the cooling system.
Fig. 3 is a schematic view illustrating a microscopic bubble formation unit attached to a pressure reducing valve of the cooling system.
Fig. 4 is a schematic view illustrating a heat exchanger of the cooling system.
Fig. 5 is a schematic view of a cooling system which does not form part of the present invention.
Fig. 6 is a schematic view illustrating a microscopic bubble formation unit attached to a refrigerant pipe of the cooling system which does not form part of the present invention.
Fig. 7 is a schematic view illustrating an example of a shape of through hole portions in the microscopic bubble formation unit.
Fig. 8 is a schematic view illustrating another example of a shape of through hole portions in the microscopic bubble formation unit.
Fig. 9 is a schematic view of a cooling system which does not form part of the present invention.
Fig. 10 is a graph illustrating a correlation between a configuration of a microscopic bubble formation unit and an average bubble diameter of microscopic bubbles in an example of the present invention.

### DESCRIPTION OF THE EMBODIMENTS

### (First embodiment)

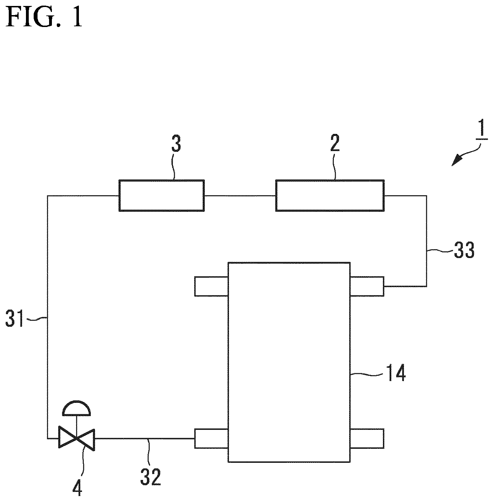

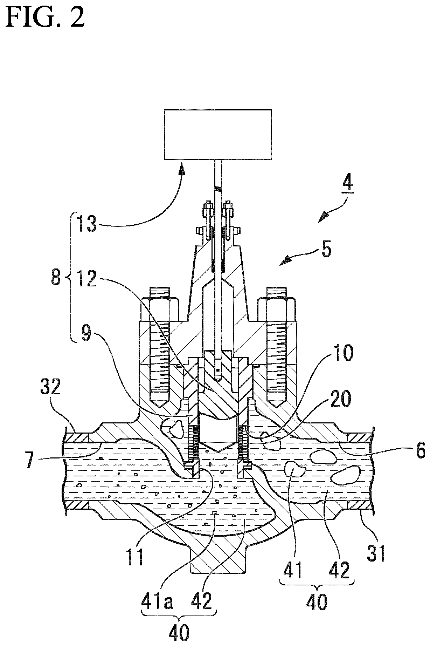

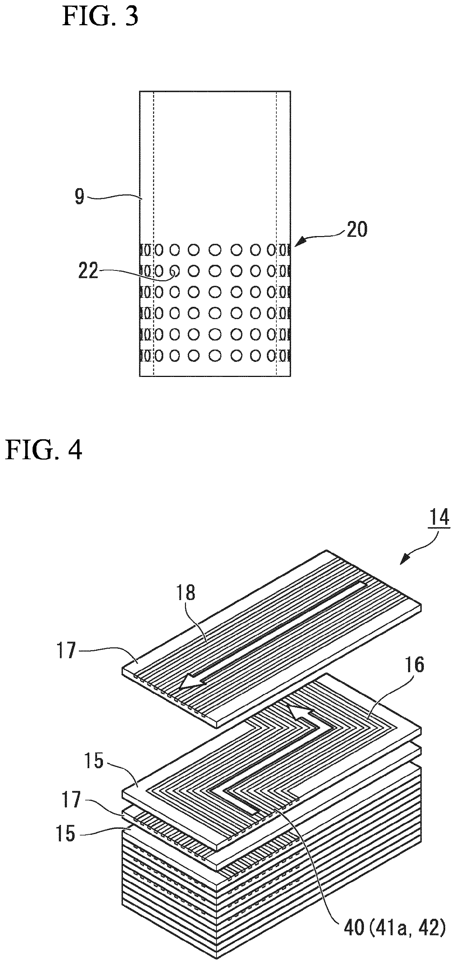

A first embodiment of the present invention will be described. Fig. 1 is a schematic view of a cooling system of the present embodiment. Fig. 2 is a schematic view illustrating a pressure reducing valve of a cooling system. Fig. 3 is a schematic view illustrating a microscopic bubble formation unit attached to pressure reducing valve of a cooling system. Fig. 4 is a schematic view illustrating a heat exchanger of a cooling system.

As illustrated in Fig. 1, a cooling system 1 of the present embodiment includes a compressor 2, a condenser 3, a pressure reducing device 4, and a heat exchanger 14.

The compressor 2 compresses a refrigerant 40 (see Fig. 2) that has been vaporized in the heat exchanger 14 to be described below and sends it to the condenser 3. A configuration of the compressor 2 is not particularly limited.

The condenser 3 liquefies the refrigerant 40 that has been compressed by the compressor 2 and sends it to the pressure reducing device 4. A configuration of the condenser 3 is not particularly limited.

The pressure reducing device 4 illustrated in Fig. 2 is a pressure reducing device for a cooling system configured to reduce a pressure of the refrigerant 40 which has been partially liquefied by the condenser 3 in the cooling system of the present embodiment. As illustrated in Fig. 2, the pressure reducing device 4 includes a pressure reducing valve 5 and a microscopic bubble formation unit 20.

The pressure reducing valve 5 includes an inlet 6 connected to a pipe 31 connected to the condenser 3, an outlet 7 connected to a refrigerant pipe 32 connected to the heat exchanger 14, and a throttle portion 8.

The throttle portion 8 includes a cylinder 9, a piston 12, and an operating unit 13.

The cylinder 9 includes the microscopic bubble formation unit 20 for introducing the refrigerant 40 from the inlet 6 into the cylinder 9 and an outlet opening 11 through which the refrigerant 40 flows out from the cylinder 9 to the outlet 7.

As illustrated in Fig. 3, the microscopic bubble formation unit 20 is formed with a plurality of through hole portions 22 penetrating through a wall surface of the cylinder 9 by processing means such as electrical discharge machining, laser machining , drilling, or three-dimensional shaping.

The through hole portions 22 have a flow path cross-sectional area smaller than a cross-sectional area of the inlet 6 of the pressure reducing valve 5 (see Fig. 2). The through hole portions 22 communicate with the inside and the outside of the cylinder 9 in a state in which the microscopic bubble formation unit 20 is formed in the cylinder 9. In the through hole portions 22 of the present embodiment, each of the through hole portions 22 has a circular opening end having an inner diameter of 1 mm or less at least on a discharge side thereof.

The refrigerant 40 passing through the through hole portions 22 becomes a flow of a vapor-liquid mixed phase during the pressure reducing process due to a pressure difference in the refrigerant 40 between the outside of the cylinder 9 and the inside of the cylinder 9 illustrated in Fig. 2 but is formed into bubbles when a vapor phase 41 of the refrigerant 40 is sheared at the opening ends on the discharge side of the through hole portions 22. Thus, the refrigerant 40 changes from a flow of a vapor-liquid mixed phase with a large bubble diameter generated in a pressure reducing process of a conventional pressure reducing device which does not have each of through hole portions 22 having a circular opening end having an inner diameter of 1 mm or less to a state in which microscopic bubbles 41a are dispersed in a liquid phase 42 (a bubble flow). The microscopic bubbles 41a generated by the microscopic bubble formation unit 20 of the present embodiment have become microscopic bubbles smaller than a milli-bubble and are dispersed into the liquid phase 42 unlike the flow of the vapor-liquid mixed phase upstream from the microscopic bubble formation unit 20.

In the present embodiment, when carbon dioxide is employed as the refrigerant 40, for example, when a supercritical liquid of carbon dioxide which is in a supercritical state in a state in which a difference of 20 atmospheres or more is generated between the inside and outside of the cylinder 9 passes through the through hole portions 22 of the microscopic bubble formation unit 20, it is possible to generate a bubble flow including bubbles having an average bubble diameter of 0.2 mm.

The piston 12 illustrated in Fig. 2 is a member which is moved forward and backward in the cylinder 9 by the operating unit 13. The piston 12 changes an opening degree of the through hole portions 22 by closing a portion of the through hole portions 22 of the cylinder 9. A flow rate of the refrigerant 40 is changed due to a portion or all of the through hole portions 22 being closed by the piston 12.

The operating unit 13 adjusts a position of the piston 12 in the cylinder 9 so that the refrigerant 40 flowing out from the outlet 7 to the outside of the pressure reducing valve 5 has a constant flow rate set in advance.

As illustrated in Figs. 1 and 4, the heat exchanger 14 includes a first conduit 16 which constitutes a flow path through which a fluid substance to be cooled flows and a second conduit 18 which constitutes a conduit through which the refrigerant 40 (see Fig. 2) flows.

The heat exchanger 14 of the present embodiment includes a first plate 15 having a plurality of first conduits 16 and a second plate 17 having a plurality of second conduits 18. The first plate 15 and the second plate 17 are alternately stacked. In the present embodiment, heat exchange is performed between the first plate 15 and the second plate 17.

An operation of the cooling system 1 of the present embodiment will be described.

In the operation of the cooling system 1 of the present embodiment illustrated in Fig. 1, the refrigerant becomes a flow of a vapor-liquid mixed phase in which at least a portion is liquefied or a liquid phase by the compressor 2 and the condenser 3 and is introduced into the pressure reducing device 4.

As illustrated in Fig. 2, the refrigerant 40 introduced into the pressure reducing device 4 is introduced from the inlet 6 into the cylinder 9 through the through hole portions 22. In the present embodiment, since the through hole portions 22 are formed as the microscopic bubble formation unit 20, the refrigerant 40 being introduced from the inlet 6 into the cylinder 9 passes through the through hole portions 22 (see Fig. 3) of the microscopic bubble formation unit 20. A vapor phase portion of the refrigerant 40, which has become a flow of a two-phase vapor-liquid in the pressure reducing process of passing through the through hole portions 22, is sheared at the opening ends on the discharge side of the through hole portions 22 such that it becomes microscopic bubbles 41a smaller than the milli-bubble illustrated in Fig. 2.

The refrigerant 40 after passing through the microscopic bubble formation unit 20 is in a state in which the microscopic bubbles 41a are dispersed into the liquid phase 42 of the refrigerant 40. The refrigerant 40 in which the microscopic bubbles 41a are dispersed is sent to the heat exchanger 14 illustrated in Fig. 1 while the microscopic bubbles 41a are maintained as bubbles with no change.

Inside the heat exchanger 14 illustrated in Figs. 1 and 4, heat exchange is performed between a substance to be cooled and the refrigerant 40. That is, heat is transferred from the first conduit 16 constituting the flow path through which the substance to be cooled flows to the refrigerant 40 in the second conduit 18. The refrigerant 40 is heated by the heat transferred from the first conduit 16 and is vaporized, thereby taking as much heat from the substance to be cooled as the heat of vaporization of the refrigerant 40, and is discharged from the heat exchanger 14 to be returned to the compressor 2 (see Fig. 1) through a pipe 33.

In the refrigerant 40 introduced into the second conduit 18, the vapor phase of the refrigerant 40 has become the microscopic bubbles 41a. Therefore, in the second conduit 18, the microscopic bubbles 41a are substantially evenly dispersed throughout the entire second conduit 18. As a result, since the vaporization of the refrigerant 40 occurs in all regions of the second conduit 18, a heat exchange efficiency becomes higher compared to a case in which only the vapor phase of the refrigerant 40 is introduced into a portion of the second conduit 18.

As described above, in the cooling system 1 and the pressure reducing device 4 of the present embodiment, the microscopic bubble formation unit 20 can disperse the vapor phase 41 of the refrigerant 40 into the liquid phase 42 as the microscopic bubbles 41a and send it to the heat exchanger 14 instead of separating the vapor phase 41 from the flow of a two-phase mixed phase of the refrigerant 40. Thus, it is possible to obtain the same heat exchange efficiency as that in the case of introducing only the liquid phase 42 of the refrigerant 40 into the heat exchanger 14, without needing to retrieve only the liquid phase 42 by providing a separator in a container shape having a certain volume for separating the refrigerant 40 into the vapor phase 41 and the liquid phase 42.

In the present embodiment, since the microscopic bubble formation unit 20 is disposed inside the flow path for the refrigerant 40 from the condenser 3 to the heat exchanger 14, particularly in the present embodiment, inside the pressure reducing valve 5, it is possible to reduce a size of the pressure reducing device 4 compared with the case in which the separator is provided. Therefore, it is also possible to reduce the overall size of the cooling system 1.

### (Second embodiment)

A second embodiment which does not form part of the present invention, will be described. Further, in the embodiment described below, components the same as the components disclosed in the first embodiment are designated by the same reference signs as in the first embodiment, and duplicated description and illustration thereof will be omitted.

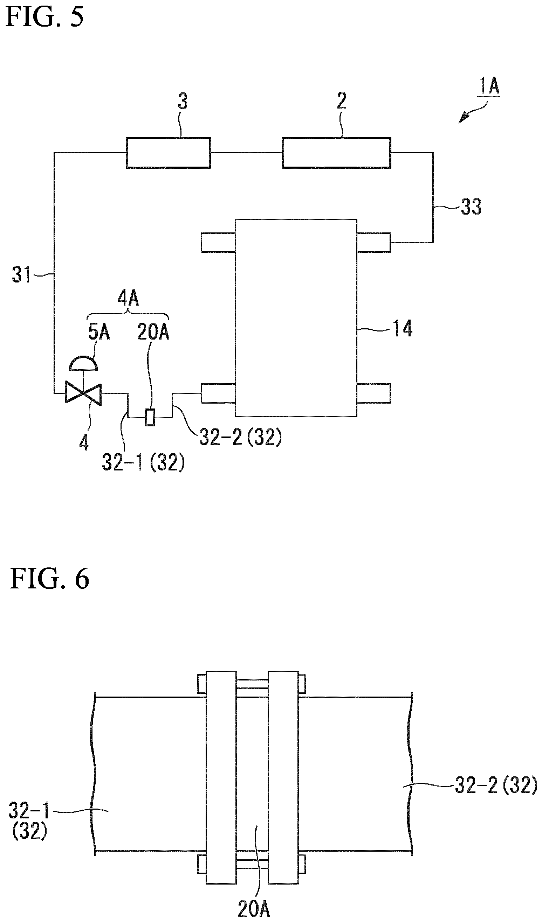

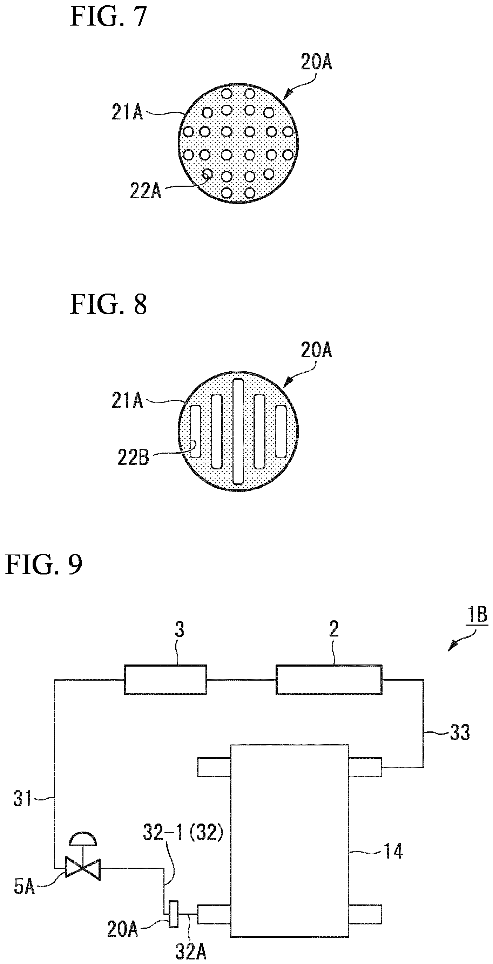

Fig. 5 is a schematic view of a cooling system of the present embodiment. Fig. 6 is a schematic view illustrating a microscopic bubble formation unit attached to a refrigerant pipe of the cooling system. Fig. 7 is a schematic view illustrating an example of a shape of through hole portions in a microscopic bubble formation unit. Fig. 8 is a schematic view illustrating another example of a shape of the through hole portions in the microscopic bubble formation unit.

A cooling system 1A of the present embodiment illustrated in Fig. 5 includes a pressure reducing device 4A having a different configuration from the pressure reducing device 4 disclosed in the first embodiment in place of the pressure reducing device 4 disclosed in the first embodiment.

The pressure reducing device 4A of the present embodiment includes a pressure reducing valve 5A and a microscopic bubble formation unit 20A.

In the present embodiment, a known configuration can be appropriately selected and employed for the pressure reducing valve 5A.

The microscopic bubble formation unit 20A of the present embodiment is disposed in a refrigerant pipe 32 connecting the pressure reducing valve 5A and a heat exchanger 14.

As illustrated in Figs. 6 and 7, the microscopic bubble formation unit 20A is formed with an opening member including a plate-shaped frame body portion 21A having a shape corresponding to a cross-sectional shape of the refrigerant pipe 32 and a plurality of through hole portions 22A having a smaller opening area than the cross-sectional area of the refrigerant pipe 32.

The through hole portions 22A have an inner diameter of 1 mm or less as in the first embodiment. The through hole portions 22A serve as flow paths connecting an upstream side and a downstream side of the microscopic bubble formation unit 20A in the refrigerant pipe 32 in a state in which the microscopic bubble formation unit 20A is attached to the refrigerant pipe 32.

Also, a shape of an opening of the through hole portions 22A in the microscopic bubble formation unit 20A of the present embodiment may not be a circular opening. As another configuration example, as illustrated in Fig. 8, an elongated slit 22B having a width of 1 mm or less may be formed in the frame body portion 21A, for example. In addition, a shape of the through hole portions 22A is not particularly limited as long as there is a pressure-loss body constituting a flow path gap of 1 mm or less in the refrigerant pipe 32.

An operation of the cooling system 1A of the present embodiment will be described.

The microscopic bubble formation unit 20A of the pressure reducing device 4A of the cooling system 1A illustrated in Fig. 5 is disposed in a portion of the refrigerant pipe 32. For example, as illustrated in Fig. 6, the refrigerant pipe 32 is divided into an upstream portion 32-1 and a downstream portion 32-2 which sandwich the microscopic bubble formation unit 20A therebetween and is fixed with the microscopic bubble formation unit 20A sandwiched therebetween.

The refrigerant 40 passing through the pressure reducing valve 5A illustrated in Fig. 5 and flowing in the refrigerant pipe 32 is a flow of a vapor-liquid mixed phase or a flow of a liquid phase with no change from the state in which a portion of the refrigerant 40 is liquefied in a condenser 3 until it reaches the microscopic bubble formation unit 20A. When the flow of the vapor-liquid mixed phase or the flow of the liquid phase passes through the plurality of through hole portions 22A of the microscopic bubble formation unit 20A and the pressure is reduced, as in the first embodiment, a vapor phase 41 of the refrigerant 40 is dispersed into a liquid phase 42 of the refrigerant 40 as microscopic bubbles 41a.

As described above, in this embodiment, as in the first embodiment, it is possible to obtain the same heat exchange efficiency as that in the case of introducing only the liquid phase 42 of the refrigerant 40 into the heat exchanger 14, without needing to retrieve only the liquid phase 42 by providing a separator.

Also, since a known pressure reducing valve 5 can be appropriately selected and employed in the present embodiment, production of the cooling system 1A is facilitated and a degree of freedom in designing the cooling system 1A is high.

### [Third embodiment]

A third embodiment which does not form part of the present invention, will be described. Fig. 9 is a schematic view of a cooling system of the present embodiment.

A cooling system IB of the present embodiment illustrated in Fig. 9 is distinguished from the configuration of the above-described second embodiment in that the pressure reducing device 4 disclosed in the above-described second embodiment further includes a horizontal pipe 32A which connects a microscopic bubble formation unit 20A and a heat exchanger 14 horizontally and in a straight line.

That is, in the present embodiment, regarding refrigerants pipes 32 on opposite sides of the microscopic bubble formation unit 20A, a pipe on the downstream side of the microscopic bubble formation unit 20A is straight.

The cooling system IB of the present embodiment is installed so that a center line of the horizontal pipe 32A is horizontal when the cooling system 1B is installed. The inside of the horizontal pipe 32A which is a straight pipe extending horizontally serves as a refrigerant flow path through which a refrigerant 40 flows with microscopic bubbles 41a. Since stagnation of the refrigerant 40 cannot easily occur in the horizontal pipe 32A, growth of the microscopic bubbles 41a due to the stagnation of the refrigerant 40 is prevented. Thus, uneven flow of the refrigerant 40 in each flow path of the heat exchanger 14 due to a diameter of bubbles growing large can be prevented.

Also, in the present embodiment, a refrigerant pipe 32-1 upstream with respect to the microscopic bubble formation unit 20A may not be a straight pipe extending horizontally. When the refrigerant pipe 32-1 upstream with respect to the microscopic bubble formation unit 20A is not a straight pipe, the refrigerant 40 easily stagnates in a bent portion of the refrigerant pipe 32-1. When a vapor phase 41 of the refrigerant 40 stagnates in the portion in which the refrigerant 40 stagnates, a portion of the vapor phase 41 that has stagnated grows to a large bubble and may move toward the horizontal pipe 32A. In the present embodiment, since this bubble becomes the microscopic bubbles 41a due to the microscopic bubble formation unit 20A, large bubbles are prevented from being directly introduced into the heat exchanger 14. As a result, in the present embodiment, a degree of freedom in handling the refrigerant pipe 32-1 is high.

### EXAMPLES

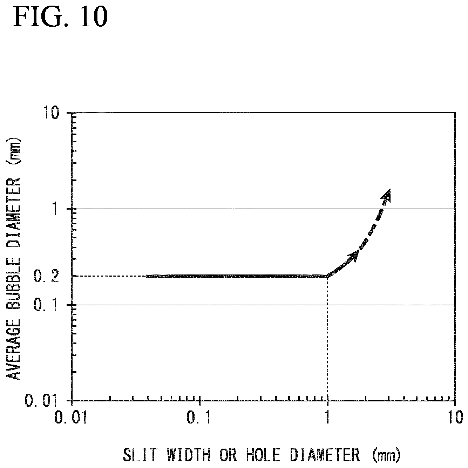

Examples of the present invention will be described. Fig. 10 is a graph illustrating a correlation between a configuration of a microscopic bubble formation unit and an average bubble diameter of a microscopic bubble.

In the present example, when an inner diameter of through hole portions of the microscopic bubble formation unit is 0.2 mm, 0.4 mm, 1.0 mm, and 1.8 mm (see Fig. 7), and when through hole portions of the microscopic bubble formation unit are a slit having a width of 0.2 mm, 0.4 mm, 1.0 mm, and 1.8 mm (see Fig. 8), an average bubble diameter of bubbles in a flow of a two-phase vapor-liquid of carbon dioxide after passing through these through hole portions of the microscopic bubble formation unit is illustrated.

As illustrated in Fig 10, when the hole diameter or the slit width in the through hole portions of the microscopic bubble formation unit was 0.2 mm, 0.4 mm, and 1.0 mm, the average bubble diameter was 0.2 mm and microscopic bubbles smaller than a milli-bubble was formed. When the hole diameter or the slit width in the through hole portions of the microscopic bubble formation unit was 1.8 mm, the average bubble diameter was not measurable and microscopic bubbles were not formed after passing through the through hole portion. As illustrated in Fig. 10, when the hole diameter or the slit width in the through hole portions of the microscopic bubble formation unit exceeded 1 mm, the average bubble diameter rapidly became larger and it is thought that it was difficult for these to be evenly dispersed into a liquid phase as bubbles.

### INDUSTRIAL APPLICABILITY

The present invention can be applied to a cooling system or a gas pressure booster system using a refrigeration cycle.

### BRIEF DESCRIPTION OF THE REFERENCE SYMBOLS

- 1, 1A, 1B:: Cooling system
- 2:: Compressor
- 3:: Condenser
- 4, 4A:: Pressure reducing device
- 5, 5A:: Pressure reducing valve
- 6:: Inlet
- 7:: Outlet
- 8:: Throttle portion
- 9:: Cylinder
- 11:: Outlet opening
- 12:: Piston
- 13:: Operating unit
- 14:: Heat exchanger
- 15:: First plate
- 16:: First conduit
- 17:: Second plate
- 18:: Second conduit
- 20, 20A:: Microscopic bubble formation unit
- 21A:: Frame body portion
- 22, 22A:: Through hole portion
- 22B:: Slit (Through hole portion, Elongated opening)
- 31:: Pipe
- 32:: Refrigerant pipe
- 32-1:: Upstream portion of refrigerant pipe
- 32-2:: Downstream portion of refrigerant pipe
- 32A:: Horizontal pipe
- 33:: Pipe
- 40:: Refrigerant
- 41:: Vapor phase of refrigerant
- 41a:: Microscopic bubble of refrigerant
- 42:: Liquid phase of refrigerant

## Claims

1. A cooling system (1) comprising:
a compressor (2) which compresses a refrigerant;
a condenser (3) disposed in a stage subsequent to the compressor (2) and configured to liquefy at least a portion of the refrigerant;
a pressure reducing device (4) disposed in a stage subsequent to the condenser (3) and configured to reduce a pressure of the refrigerant which has been partially liquefied; and
a heat exchanger (14) disposed in a stage subsequent to the pressure reducing device (4) and having a flow path through which the refrigerant flows, **characterized in that**:
the pressure reducing device (4) includes:
a pressure reducing valve (5) and
a microscopic bubble formation unit (20) which is disposed inside a flow path for the refrigerant from the condenser (3) to the heat exchanger (14) and which includes an opening member in which a plurality of through hole portions (22) which constitute a plurality of microscopic flow paths having a flow path cross-sectional area smaller than a cross-sectional area of the flow path are formed, and which is configured to form a vapor phase of the refrigerant into microscopic bubbles (41a) to be dispersed into a liquid phase of the refrigerant
the pressure reducing valve (5) includes an inlet (6) connected to a pipe (31) connected to the condenser (3), an outlet (7) connected to a refrigerant pipe (32) connected to the heat exchanger (14), and a throttle portion (8),
the throttle portion (8) includes a cylinder (9), a piston (12), and an operating unit (13),
the cylinder (9) includes the microscopic bubble formation unit (20) for introducing the refrigerant from the inlet (6) into the cylinder (9) and an outlet opening (11) through which the refrigerant flows out from the cylinder (9) to the outlet (7),
an opening diameter at least on a discharge side of each through hole in the plurality of through hole portions (22) is 1 mm or less, and
when carbon dioxide is employed as the refrigerant, each of the through hole is configured to generate a flow of a vapor-liquid mixed phase generated by reducing a pressure of carbon dioxide which is in a supercritical state in a state in which a difference of 20 atmospheres or more is generated between an inside and an outside of the cylinder (9) and an average diameter of the microscopic bubbles (41a) is 0,2 mm.

2. The cooling system according to claim 1, wherein each through hole in the plurality of through hole portions (22) has an elongated opening having a width of 1 mm or less.

3. The cooling system according to claim 1, wherein the microscopic bubble formation unit is disposed inside the pressure reducing valve (5).

4. The cooling system according to claim 1, further comprising a horizontal pipe having a refrigerant flow path which connects the microscopic bubble formation unit and the heat exchanger horizontally and in a straight line.

## Patentansprüche

1. Kühlsystem (1) umfassend:
einen Kompressor (2), der ein Kühlmittel komprimiert;
einen Kondensor (3), der in einer Stufe nach dem Kompressor (2) angeordnet ist und dazu eingerichtet ist, zumindest einen Teil des Kühlmittels zu verflüssigen;
eine Druckminderungsvorrichtung (4), die in einer Stufe nach dem Kondensor (3) angeordnet ist und dazu eingerichtet ist, einen Druck des Kühlmittels, das zum Teil verflüssigt wurde, zu mindern; und
einen Wärmetauscher (14), der in einer Stufe nach der Druckminderungsvorrichtung (4) angeordnet ist und einen Strömungsweg hat, durch welchen das Kühlmittel strömt, **dadurch gekennzeichnet, dass**
die Druckminderungsvorrichtung (4) beinhaltet:
ein Druckminderventil (5) und
eine mikroskopische Blasen bildende Einheit (20), die in einem Strömungsweg für das Kühlmittel von dem Kondensor (3) zu dem Wärmetauscher (14) angeordnet ist und welche ein Öffnungselement beinhaltet, in welchem eine Vielzahl von Durchgangslochabschnitten (22) ausgebildet sind, die eine Vielzahl von Mikrokanälen bilden, die eine kleinere Kanal-Querschnittsfläche aufweisen als eine Querschnittsfläche des Strömungswegs, und welche dazu eingerichtet ist, eine Dampfphase des Kühlmittels in die Form von mikroskopischen Blasen (41a) zu bringen, die in eine Flüssigphase des Kühlmittels verteilt werden sollen,
wobei das Druckminderventil (5) einen Einlass (6), der mit einem mit dem Kondensor (3) verbundenen Rohr (31) verbunden ist, einen Auslass (7), der mit einem mit dem Wärmetauscher (14) verbundenen Kühlmittelrohr (32) verbunden ist, und einen Drosselabschnitt (8) beinhaltet,
wobei der Drosselabschnitt (8) einen Zylinder (9), einen Kolben (12) und eine Bedieneinheit (13) beinhaltet,
wobei der Zylinder (9) die mikroskopische Blasen bildende Einheit (20) zum Einbringen des Kühlmittels von dem Einlass (6) in den Zylinder (9) und eine Auslassöffnung (11) beinhaltet, durch die das Kühlmittel aus dem Zylinder (9) zu dem Auslass (7) strömt,
wobei ein Öffnungsdurchmesser zumindest auf einer Auslassseite jedes Durchgangslochs in der Vielzahl von Durchgangslochabschnitten (22) 1 mm oder weniger beträgt, und
wenn Kohlendioxid als Kühlmittel verwendet wird, jedes der Durchgangslöcher dazu eingerichtet ist, in einem Zustand, in dem eine Differenz von 20 Atmosphären oder mehr zwischen einer Innenseite und einer Außenseite des Zylinders (9) erzeugt wird und ein Durchschnittsdurchmesser der mikroskopischen Blasen (41a) 0.2mm beträgt, einen Strom einer Dampf-Flüssigkeits-Mischphase zu erzeugen, die erzeugt wird durch Reduzieren eines Drucks des Kohlendioxids, das in einem superkritischen Zustand ist.

2. Kühlsystem nach Anspruch 1, wobei jedes Durchgangsloch in der Vielzahl von Durchgangslochabschnitten (22) eine längliche Öffnung mit einer Breite von 1 mm oder weniger hat.

3. Kühlsystem nach Anspruch 1, wobei die mikroskopische Blasen bildende Einheit in dem Druckminderventil (5) angeordnet ist.

4. Kühlsystem nach Anspruch 1, weiterhin umfassend ein horizontales Rohr mit einem Kühlmittelströmungsweg, der die mikroskopische Blasen bildende Einheit und den Wärmetauscher horizontal und in einer geraden Linie verbindet.

## Revendications

1. Système de refroidissement (1) comprenant :
un compresseur (2) qui comprime un fluide frigorigène ;
un condenseur (3) disposé dans un étage à la suite du compresseur (2) et configuré pour liquéfier au moins une partie du fluide frigorigène ;
un dispositif de réduction de pression (4) disposé dans un étage à la suite du condenseur (3) et configuré pour réduire la pression du fluide frigorigène qui a été partiellement liquéfié ; et
un échangeur de chaleur (14) disposé dans un étage à la suite du dispositif de réduction de pression (4) et ayant un trajet d'écoulement à travers lequel le fluide frigorigène s'écoule, **caractérisé en ce que** :
le dispositif de réduction de pression (4) comprend :
une vanne de réduction de pression (5), et
une unité de formation de bulles microscopiques (20) qui est disposée à l'intérieur d'un trajet d'écoulement pour le fluide frigorigène du condenseur (3) à l'échangeur de chaleur (14) et qui comprend un organe d'ouverture dans lequel une pluralité de parties de trous traversants (22) qui constituent une pluralité de trajets d'écoulement microscopiques ayant une section transversale de trajet d'écoulement inférieure à une section transversale du trajet d'écoulement sont formées, et qui est configurée pour former une phase vapeur du fluide frigorigène en des bulles microscopiques (41a) à disperser dans une phase liquide du fluide frigorigène,
la vanne de réduction de pression (5) comprend une entrée (6) reliée à un tuyau (31) relié au condenseur (3), une sortie (7) reliée à un tuyau de fluide frigorigène (32) relié à l'échangeur de chaleur (14), et une partie d'étranglement (8),
la partie d'étranglement (8) comprend un cylindre (9), un piston (12), et une unité d'actionnement (13),
le cylindre (9) comprend l'unité de formation de bulles microscopiques (20) pour introduire le fluide frigorigène à partir de l'entrée (6) dans le cylindre (9) et une ouverture de sortie (11) à travers laquelle le fluide frigorigène s'écoule hors du cylindre (9) vers la sortie (7),
un diamètre d'ouverture au moins d'un côté de refoulement de chaque trou traversant dans la pluralité de parties de trous traversants (22) est de 1 mm ou moins, et
lorsque du dioxyde de carbone est utilisé en tant que fluide frigorigène, chacun des trous traversants est configuré pour générer un écoulement d'un mélange de phase vapeur et de phase liquide généré en réduisant une pression du dioxyde de carbone qui est dans un état supercritique dans un état dans lequel une différence de 20 atmosphères ou plus est générée entre l'intérieur et l'extérieur du cylindre (9) et un diamètre moyen des bulles microscopiques (41a) est de 0,2 mm.

2. Système de refroidissement selon la revendication 1, dans lequel chaque trou traversant dans la pluralité de parties de trous traversants (22) a une ouverture allongée ayant une largeur de 1 mm ou moins.

3. Système de refroidissement selon la revendication 1, dans lequel l'unité de formation de bulles microscopiques est disposée à l'intérieur de la vanne de réduction de pression (5).

4. Système de refroidissement selon la revendication 1, comprenant en outre un tuyau horizontal ayant un trajet d'écoulement de fluide frigorigène qui relie l'unité de formation de bulles microscopiques et l'échangeur de chaleur horizontalement et en ligne droite.
